**Europäisches Patentamt**

**European Patent Office**

**Office européen des brevets**

(19)

(11) Publication number: **0 261 537**
**B1**

(12) # EUROPEAN PATENT SPECIFICATION

(45) Date of publication of the patent specification:
14.11.90

(51) Int. Cl.⁵: **B60T 13/24**

(21) Application number: **87113385.6**

(22) Date of filing: **14.09.87**

(54) Servo-assisted vacuum brake device for vehicles.

(30) Priority: **23.09.86 IT 6772886**

(43) Date of publication of application:
**30.03.88 Bulletin 88/13**

(45) Publication of the grant of the patent:
**14.11.90 Bulletin 90/46**

(84) Designated Contracting States:
**DE ES FR GB SE**

(56) References cited:
**EP-A- 0 014 187**
**FR-A- 1 559 013**
**US-A- 2 703 637**
**US-A- 2 904 960**
**US-A- 3 756 660**

(73) Proprietor: **FIAT AUTO S.p.A., Corso Giovanni Agnelli 200, I-10135 Torino(IT)**

(72) Inventor: **Mattis, Enzo, Via Rossini, 59, I-10070 Fiano(IT)**

(74) Representative: **Prato, Roberto et al, STUDIO TORTA Società Semplice Via Viotti 9, I-10121 Torino(IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a servo-assisted brake device for vehicles, in particular motor vehicles, of the so-called vacuum type, ie in which the mechanical action performed by the user during braking, for example by pressing his foot on the brake pedal, is assisted beyond a certain force threshold by a pneumatic actuator, one chamber of which is gradually connected to atmosphere while the other chamber remains permanently connected to a vacuum source, for example the intake manifold and/or a suitable vacuum pump driven by the vehicle engine. Two main types of servo-assisted vacuum devices (servo brakes) are available, known to experts of the art by the names Master-vac and hydro-vac. In the first type, the vacuum actuator is mounted directly rigid with the master hydraulic cylinder downstream of this latter with respect to the control rod operated by the brake pedal. A control valve is provided integral with the vacuum actuator and rigid with the control rod, to control access of atmospheric pressure into one of the two actuator chambers by a mechanical device sensitive to the force exerted on the control rod. When this exceeds a given threshold value, determined by the compressibility of an elastic reaction disc, the air flows into one chamber of the actuator to thus exert on its piston, which is rigid with the control rod, a thrust concordant with that imparted by the user and which assists the operation of the master cylinder. In the second type, the actual master cylinder is controlled directly, by the control rod alone, and the pneumatic actuator with the control valve is disposed downstream of the master cylinder and controls the movement of a piston, the task of which is to directly increase in the braking system the hydraulic pressure produced mechanically by the user acting on the master cylinder. The treshold force for the operation of the servo brake is a pressure threshold, which is sensed by the control valve, this being also formed integrally with the pneumatic actuator.

From US 2 703 637 (which corresponds to the pre-characterizing part of Claim 1) is also known a braking device in which the pneumatic actuator is placed upstream the master cylinder and the control valve downstream the same.

The aforesaid devices have the drawback of a certain constructional complexity and in particular a relatively large amount of idle travel makes operation of the brake less prompt than in a non servo-assisted system. This results in a certain insensitivity of the brake pedal during the initial part of its travel, and this can be annoying for the user. Finally, the presence fo the control valve formed integrally with the vacuum actuator further increases the overall size and complexity of this latter.

The object of the invention is to provide a servo-assisted vacuum brake device which is free of the aforesaid drawbacks, and in particular is of simple construction and small overall size, in addition to possessing minimum idle travel.

This object is attained according to the invention by a servo-assisted vacuum brake device for a vehicle, comprising a master hydraulic cylinder arranged to pump fluid under pressure into the vehicle braking circuit following the translation of a control rod mechanically operable by the user against the action of elastic means, a first pneumatic vacuum actuator a first chamber of which is delimited by a sliding piston rigid with said control rod and is connected to a vacuum control valve arranged to selectively connect said first chamber to atmosphere or to a vacuum source, said first vacuum actuator being disposed upstream of said master cylinder with respect to said control rod and being traversed in a fluid-tight manner by the control rod and said control valve being disposed downstream of said master cylinder with respect to said control rod, and means for operating the control valve in accordance with the force exerted by the user on the control rod, said control valve operating means comprising a hydraulic actuator connected hydraulically into said vehicle braking circuit downstream of said master cylinder, and a second pneumatic actuator disposed mechanically in series with said hydraulic actuator between this latter and said control valve, characterised in that said first pneumatic actuator comprises a second chamber subdivided from the first chamber by said sliding piston and permanently connected to said vacuum source by way of a unidirectional valve, and in that, in combination, said second pneumatic actuator of said control valve comprises a respective third and fourth chamber which are connected permanently to said second and said first chamber of the first pneumatic vacuum actuator respectively.

The invention will be more apparent from the nonlimiting description given hereinafter of one embodiment thereof with reference to the accompanying drawings, in which:

Figure 1 shows a servo-assisted vacuum brake device constructed in accordance with the invention;

Figure 2 is a longitudinal section through a first detail of the device according to the invention; and

Figure 3 is a longitudinal section through a second detail of the device according to the invention.

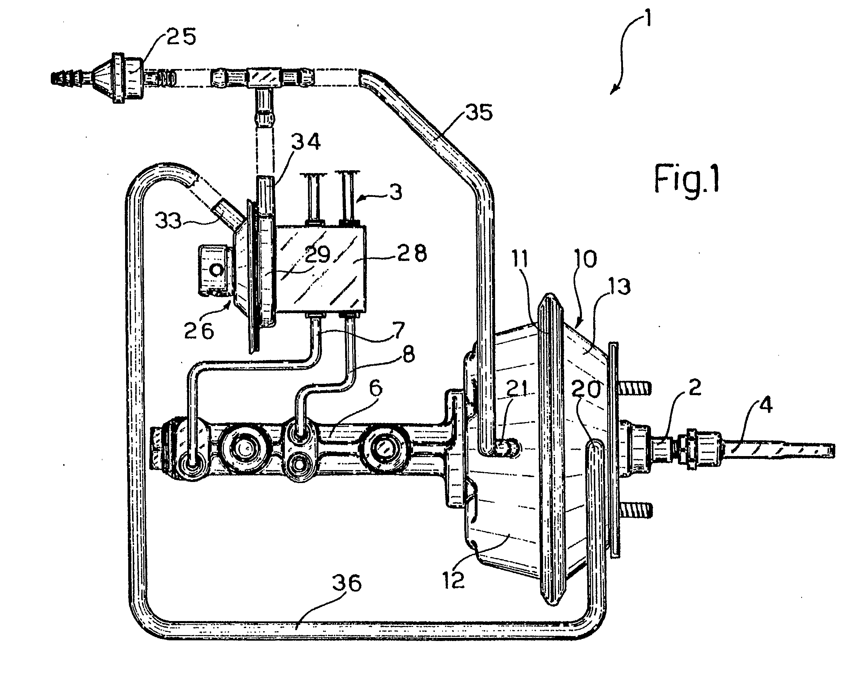

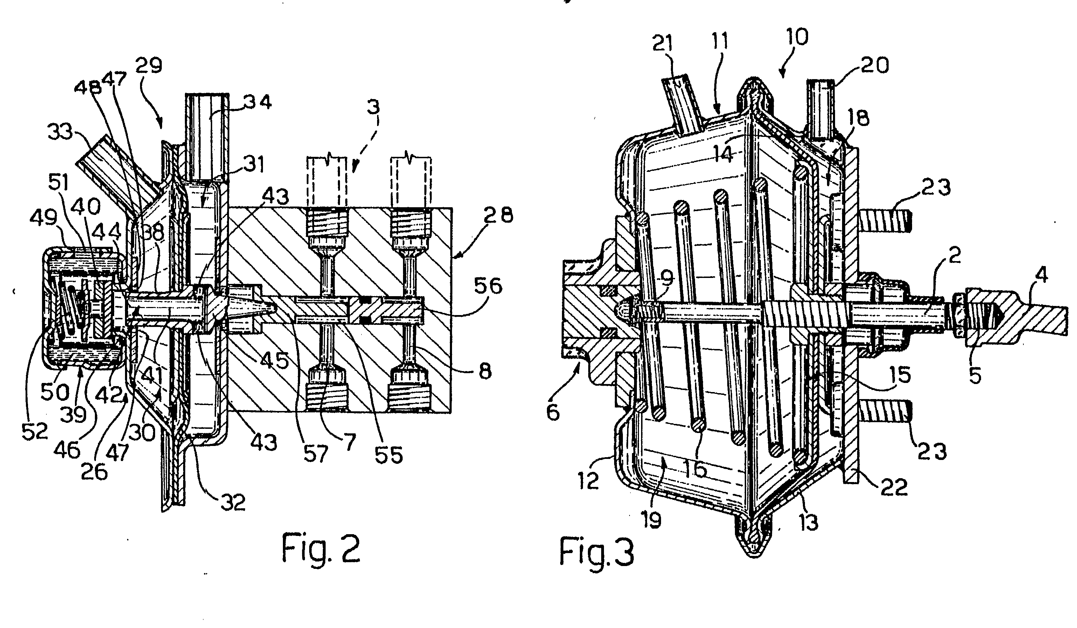

In Figures 1 to 3, the reference numeral 1 indicates overall a servo-assisted vacuum brake device forming part of a braking system of known type, not shown for simplicity, of a vehicle of any known type, also not shown for simplicity, for example a motor vehicle, which is arranged to transform the mechanical work performed by the user on a control rod 2, for example by means of a known pedal, not shown, into pressure energy to be fed in the form of pressurized oil into a braking circuit 3 of known type, shown only partly for simplicity, which is connected to suitable braking mechanisms (shoes or discs) of the vehicle wheels, also of known type and therefore not shown for simplicity. The control rod 2 is connected to said pedal, not shown, by a connecting rod 4 secured to one end of the rod 2 in an adjustable manner by means of a threaded coupling 5, and controls by virtue of its axial translation a master hydraulic cylinder 6, of known type and therefore not further described, which is arranged to pump pressurised fluid, for example oil, into the circuit 3 following translation of the rod 2 towards the cylinder 6 resulting from mechanical action by the user, for example a thrust, exerted by said pedal on the connecting rod 4. The circuit 3 comprises a pair of delivery pipes 7 and 8 emerging from the master cylinder 6, and this latter cooperates directly with an end 9 of the rod 2 (Figure 3), which is also adjustable. Directly secured to the master cylinder 6, upstream of this latter with respect to the position of the rod 2, there is a pneumatic vacuum actuator 10, which is traversed in a fluid-tight manner by the rod 2 and is composed of a simple rigid outer casing 11 comprising two half-casings 12 and 13 between which a deformable diaphragm 14 is clamped in a fluid-tight manner, a sliding piston 15 rigidly carried by the diaphragm 14 and rigid with the rod 2, and a counteracting spring 16 inserted between the cylinder 6 and piston 15 in such a manner as to oppose the translational movement of the rod 2 towards the cylinder, and housed within the casing 11. In particular, the diaphragm 14 and relative piston 15 divide the interior of the casing 11 into a first chamber 18 and a second chamber 19, which communicate with the outside through respective connectors 20 and 21 and are bounded by the half-casings 13 and 12. The spring 16 is housed in the chamber 19 and acts directly on the piston 15, the chamber 18 being delimited at the base wall of the half-casing 13 by a connection plate 22 provided with screws 23 to allow the assembly comprising the actuator 10 and cylinder 6 to be projectingly fixed on a body element of said vehicle, not shown for simplicity, for example against the separation bulkhead between the passenger compartment and engine compartment.

The device 1 also comprises a unidirectional valve 25 of known type, connected in known manner, not shown for simplicity, to a vacuum source, such as the vehicle intake manifold, and a control valve 26 for the actuator 10, which according to the invention is not incorporated in this latter but instead is disposed independently downstream of the master cylinder 6 with respect to the position of the rod 2 and incorporates respective operating means comprising a hydraulic actuator 28 connected hydraulically in series with or branching into the circuit 3 downstream of the cylinder 6 (ie downstream of this latter with respect to the flow direction of the fluid pumped by it), and a second pneumatic actuator 29 disposed mechanically in series with the actuator 28 between this latter and the external part of the valve 26. The pneumatic actuator 29 comprises a pair of fluid-tight chambers 30 and 31 separated from each other in a fluid-tight manner by a deformable diaphragm 32 and provided with respective connectors 33 and 34. By way of the connector 34, the chamber 31 is branched into a vacuum pipe 35 connecting the chamber 19 to the valve 25, whereas the chamber 30 is permanently connected in series with the chamber 18, for example by a hose 36. The valve 26 comprises a spool 38 disposed in the actuator 29 and rigid with the diaphragm 32, an air intake 39 communicating with the environment at atmospheric pressure, for example with the interior of the vehicle engine compartment, and a valving element 40 disposed coaxially to the spool 38 directly on the inside of the air intake 39 and arranged to selectively open and close this latter towards the spool 38 against the action of elastic means. The spool 38 comprises an internal T-shaped duct 41 having respective mouths 42 and 43, frontal and lateral respectively, provided in correspondence with respective opposite ends 44 and 45 of the spool 38 to lie in correspondence with the chambers 30 and 31 respectively, so as to connect these latter together.

Specifically, the duct 41 connects the chamber 31 to a valve seat 46 for the valving element 40. This seat communicates with the interior of the air intake 39 on the side facing the valving element 40, and with the chamber 30 on the opposite side by way of respective holes 47 provided through a guide element 48 for the spool 38, this element disposed in the chamber 30 in correspondence with the seat 46 and slidingly engaged by the end 44. The element 48 forms part of the air intake 39, which also comprises a housing 49 mounted rigidly on the seat 46 on the outside of the actuator 29, and a filter 50 disposed about the valving element 40 in front of respective through apertures 51 in the housing 49. The valving element 40 is slidingly housed in this latter, together with a spring 52 arranged to urge it with predetermined force against the seat 46 so as to close in a fluid-tight manner any communication between the external environment and chamber 30 through the air intake 39. the valving element 40, which is formed for example from a pair of discs, is also arranged to cooperate in a fluid-tight manner with the end 44 of the spool 38 in order to close the mouth 42 disposed in front of the seat 46, so as to interrupt communication between the chambers 30 and 31 through the duct 41. The end 45 of the spool 38 cooperates with the mobile part of the actuator 28. This latter comprises a chamber 55, for example cylindrical, traversed transversely by the conduits 7 and 8 of the circuit 3, and a pair of respective plungers 56 and 57 mobile axially in the chamber 55 and disposed in tandem, ie coaxial and adjacent one behind the other, so that the plunger 56 separates in a fluid-tight manner that part of the chamber 55 traversed by the conduit 8 from that part traversed by the conduit 7, and the plunger 57 closes the chamber 55 towards the spool 38 in a fluid-tight manner. The end 45 of this latter cooperates by contact with the plunger 57 and this latter cooperates by contact at its opposite end with the plunger 56. In this manner a pressure increase in either one or in both the conduits 7 and 8 produces direct or indirect movement (this latter resulting from movement of the plunger 56) of the piston 57 against the spo ol 38 to consequently cause this latter to translate in the element 48 towards the seat 46 and valving element 40, with deformation of the diaphragm 32.

In use, when the user is not pressing on the brake pedal, the rod 2 is in the position shown in Figure 3 and the spring 16 retains the piston 15 against the plate 22. Under these conditions, the cylinder 6 is deactivated, there is no pressure in the circuit 3 and the valve 26 with the actuator assembly 28 and 29 rigid with it is in the configuration shown in Figure 2. Consequently the vacuum produced by the vacuum source extends through the pipe 35 and connectors 34 and 21 into the chambers 19 and 31, and from this latter it is transmitted through the duct 41 and holes 47 of the element 48 to the chamber 30, and from here through the pipe 36 and into the chamber 18. The external air cannot enter the chamber 30 as the seat 36 is closed by the valving element 40. When the user brakes by operating the brake pedal, he causes the rod 2 to translate towards the cylinder 6, with consequent operation of this latter and pressurisation of the circuit 3. This pressure operates the actuator 28 to cause the plunger 57 to move towards the left (Figure 2) together with the spool 38, until the end 44 of this latter is brought against the valving element 40 with consequent closure of the mouth 44. Under these conditions the vacuum in the chambers 30, 31, 18 and 19 remains unaltered, but the closure of the mouth of the duct 41 towards the chamber 30 interrupts communication between this latter and the chamber 31. Furthermore, the movement of the spool 38 and plunger 57 ceases, as this is opposed by the force which keeps the valving element 40 closed, deriving from the action of the spring 52 plus the action of atmospheric pressure. If the user continues to press the pedal in order to continue the braking action, he exerts on the rod 2 a progressively increasing force which corresponds to a progressively increasing pressure produced by the master cylinder 6. On attaining a predetermined threshold corresponding to the setting of the spring 52, the thrust exerted by the oil pressure on the valving element 40 by way of the plunger 57 and spool 38 causes the valving element 40 to move towards the left with compression of the spring 52 and opening of the seat 46. Under these conditions, communication between the chambers 30 and 31 remains interrupted because the end 44 of the spool 38 still rests in a fluid-tight manner against the valving element 40, but the air intake 38 is opened because the interior of the housing 49 comes into communication with the seat 46 and consequently into communication with the chamber 30 by way of the holes 47. The air at atmospheric pressure thus enters the chamber 30 and from here it moves into the chamber 18 to exert a thrust against the piston 15 which acts on the rod 2 in a direction concordant with the thrust exerted by the user and proportional to it. Finally, during breaking, the thrust exerted by the air on the rod 2 is automatically controlled on the basis of the thrust exerted by the user on the pedal, because the air entering the chamber 30 also operates the actuator 29 in the reverse direction to that produced by the pressurised oil on the actuator 28. As the two actuators are in series, ie are disposed one adjacent to the other in the operating direction, the spool 38 moves towards the right with partial or total closure of the seat 46, to adjust the air flow towards the chamber 18 proportionally to the hydraulic pressure obtained from the force exerted by the user on the pedal. If this tends to decrease, there is a pressure decrease in the circuit 3, which enables the air pressure to further move the spool 38 towards the right, possibly with closure of the seat 46 (and thus cessation of air entry) and possible reopening of the mouth 42 (and this reduction in the pressure against the piston 18 by consequent draw-off of air towards the vacuum source), which if protracted in time leads to cessation of the braking action. In contrast, if the force tends to increase, the oil pressure rises and produces a new leftward movement of the valving element 38 with consequent intake of a larger air quantity to compensate the volume increase of the chamber 18, thus ensuring that the supplementary thrust on the rod 2 is constant.

The advantages of the invention are apparent from the aforegoing description. Separating the control valve from the vacuum actuator reduces the overall size of this latter, and allows easier location of the entire braking system within the engine compartment. It also enormously simplifies the construction both of the actuator and of the control valve, to allow an increase in productivity and reduction in production costs. Finally, it enables the advantages of both known vacuum systems to be combined in a single device while at the same time obviating their drawbacks, in that the idle travel is reduced to a minimum as the mechanical devices which would cause it (reaction discs, hydraulic valves etc.) have been dispensed with.

## Claims

1. A servo-assisted vacuum brake device for a vehicle, comprising a master hydraulic cylinder (6) arranged to pump fluid under pressure into the vehicle braking circuit following the translation of a control rod (2) mechanically operable by the user against the action of elastic means, a first pneumatic vacuum actuator (10) a first chamber (18) of which is delimited by a sliding piston (15) rigid with said control rod and is connected to a vacuum control valve (26) arranged to selectively connect said first chamber to atmosphere or to a vacuum source, said first vacuum actuator (10) being disposed upstream of said master cylinder (6) with respect to said control rod (2) and being traversed in a fluid-tight manner by the control rod and said control valve (26) being disposed downstream of said master cylinder (6) with respect to said control rod (2), and means for operating the control valve in accordance with the force exerted by the user on the control rod, said control valve operating means comprising a hydraulic actuator (28) connected hydraulically into said vehicle braking circuit (3) downstream of said master cyl inder (6), and a second pneumatic actuator (29) disposed mechanically in series with said hydraulic actuator (28) between this latter and said control valve (26), characterised in that said first pneumatic actuator comprises a second chamber (19) subdivided from the first chamber by said sliding piston (15) and permanently connected to said vacuum source by way of a unidirectional valve (25), and in that, in combination, said second pneumatic actuator (29) of said control valve (26) comprises a respective third (31) and fourth (30) chamber which are connected permanently to said second (19) and said first (18) chamber of the first pneumatic vacuum actuator (10) respectively.

2. A device as claimed in claim 1, characterised iu that said control valve (26) comprises a spool (38) disposed within said second pneumatic actuator (29) and provided internally with a duct (41) arranged to put said third (31) and said fourth (30) chamber into mutual communication, an air intake (39) communicating with the environment at atmospheric pressure, and a valving element (40) for said air intake (39) arranged to cooperate with a first end (44) of said spool (38) in order to close a first mouth (42) of said internal duct of the spool and to be moved by this latter against the action of elastic means (52) in such a direction as to open said air intake.

3. A device as claimed in claim 2, characterised in that said spool (38) is carried rigidly on said pneumatic actuator (29) by a mobile element (32) thereof which separates said third from said fourth chamber in a fluid-tight manner, and by way of its second end (45), which is distant from the first and is provided laterally with a second mouth (43) of said internal duct (41), it cooperates with said hydraulic actuator, said first mouth (42) of the inner duct being disposed in correspondence with said fourth chamber (30) in front of said air intake (39), and said second mouth (43) of the internal duct being disposed in correspondence with said third chamber (31).

4. A device as claimed in claim 3, characterised in that said air intake (39) comprises a guide element (48) for said first end of said spool and disposed in said fourth chamber (30) in correspondence with a valve seat (46) for said valving element, and provided with a plurality of communication holes (47) between said seat and said fourth chamber, a housing (49) mounted rigidly on said valve seat and internally containing said valving element (40) and a spring (52) arranged to hold this latter against said valve seat, and a filter (50) disposed about said valving element in front of respective lateral through apertures (51) in said housing (49).

5. A device as claimed in claim 4, characterised in that said hydraulic actuator (28) comprises a chamber (55) traversed transversely by respective conduits (7, 8) of said braking circuit (3) and respective mobile plungers (56, 57) disposed adjacent one behind the other and cooperating with said spool (38), they closing in a fluid-tight manner said chamber (55) towards said spool, such that become moved by the pressure produced by said master cylinder (6) to consequently move said spool (38) against said valving element (40), thus distancing this latter from said valve seat (46).

6. A device as claimed in one of the preceding claims, characterised in that said fourth chamber (30) is connected to said first chamber (18) by a hose (36), and said third chamber (31) is connected into a vacuum pipe (35) which connects said first chamber (19) to said unidirectional valve (25).

7. A device as claimed in one of the preceding claims, characterised in that said elastic counteracting means (16) for said control rod (2) are housed in said first chamber (18) and act directly on said sliding piston (15).

## Patentansprüche

1. Unterdruck-Bremskraftverstärkungsvorrichtung für ein Fahrzeug, mit einem Hydraulikhauptzylinder (6), der für ein Pumpen eines Fluids unter Druck in den Fahrzeugbremskreis gefolgt auf die Verschiebung einer durch einen Benutzer mechanisch gegen die Wirkung von elastischen Mitteln bedienbaren Steuerstange (2) eingerichtet ist, einem ersten pneumatischen Unterdrucksteller (10), bei welchem eine erste Kammer (18) durch einen mit der Steuerstange starren Gleitkolben (15) begrenzt und mit einem Unterdrucksteuerventil (26) verbunden ist, welches so eingerichtet ist, daß es die erste Kammer entweder mit Atmosphäre oder einer Unterdruckquelle verbindet, wobei der erste Unterdrucksteller (10) strömungsoberhalb des Hauptzylinders (6) in Bezug auf die Steuerstange (2) angeordnet ist und in fluiddichter Weise von der Steuerstange durchsetzt wird, und wobei das Steuerventil (26) strömungsunterhalb des Hauptzylinders (6) in bezug auf die Steuerstange (2) angeordnet ist, und Mitteln zum Betätigen des Steuerventils nach Maßgabe der durch den Benutzer auf die Steuerstange ausgeübten Kraft, wobei die Steuerventilbetätigungsmittel einen hydraulischen Steller (28) umfassen, der hydraulisch in den Fahrzeugbremskreis (3) strömungsunterhalb des Hauptzylinders (6) angeschlossen ist, und einem zweiten pneumatischen Steller (29), der mechanisch in Reihe mit dem hydraulischen Steller (28) zwischen letzterem und dem Steuerventil (26) angeordnet ist, dadurch gekennzeichnet, daß der erste pneumatische Steller eine zweite Kammer (19) umfaßt, welche gegenüber der ersten Kammer durch den Gleitkolben (15) abgeteilt und permanent mit der Unterdruckquelle über ein Einrichtungsventil (25) verbunden ist, und daß, in Kombination, der zweite pneumatische Steller (29) des Steuerventils (26) eine dritte (31) und vierte (30) Kammer umfaßt, die permanent mit der zweiten (19) bzw. ersten (18) Kammer des ersten pneumatischen Stellers (10) verbunden sind.

2. Vorrichtung nach Anspruch 1, dadurch gekennzeichnet, daß das Steuerventil (26) einen Abstandsring (38), welcher in dem zweiten pneumatischen Steller (29) angeordnet und innen mit einem Kanal (41) versehen ist, welcher so eingerichtet ist, daß er die dritte (31) und vierte (30) Kammer wechselseitig in Verbindung setzt, einen Lufteinlaß (39), welcher mit der Umgebung bei Atmosphärendruck in Verbindung steht, und ein Ventilelement (40) für den Lufteinlaß (39), welches so eingerichtet ist, daß es mit einem ersten Ende (44) des Abstandsringes (38) zusammenwirkt, um eine erste Mündung (42) des inneren Kanals des Abstandsringes zu schließen, und durch letzteren gegen die Wirkung von elastischen Mitteln (52) in einer Richtung, die zu einer Öffnung des Lufteinlasses führt, bewegt zu werden, umfaßt.

3. Vorrichtung nach Anspruch 2, dadurch gekennzeichnet, daß der Abstandsring (38) starr auf dem pneumatischen Steller (29) durch ein bewegliches Element (32) desselben getragen wird, welches die dritte von der vierten Kammer in fluiddichter Weise trennt, wobei er über sein zweites Ende (45), welches vom ersten im Abstand liegt und seitlich mit einer zweiten Mündung (43) des inneren Kanals (41) versehen ist, mit dem hydraulischen Steller zusammenwirkt, wobei die erste Mündung (42) des inneren Kanals in Entsprechung zu der vierten Kammer (30) vor dem Lufteinlaß (39) angeordnet ist und die zweite Mündung (43) des inneren Kanals in Entsprechung zu der dritten Kammer (31) angeordnet ist.

4. Vorrichtung nach Anspruch 3, dadurch gekennzeichnet, daß der Lufteinlaß (39) ein Führungselement (48) für das erste Ende des Abstandsringes und angeordnet in der vierten Kammer (30) in Entsprechung zu einem Ventilsitz (46) für das Ventilelement und versehen mit einer Anzahl von Verbindungslöchern (47) zwischem dem Sitz und der vierten Kammer, ein Gehäuse (49), welches starr auf dem Ventilsitz angebracht ist und innen das Ventilelement (40) und eine Feder (52), welche so eingerichtet ist, daß sie letzteres gegen den Ventilsitz hält, enthält, und einen Filter (50), welcher um das Ventilelement herum vor entsprechenden seitlichen Durchgangsöffnungen (51) des Gehäuses (49) angeordnet ist, umfaßt.

5 . Vorrichtung nach Anspruch 4, dadurch gekennzeichnet , daß der hydraulische Steller (28) eine Kammer (55), die in Querrichtung durch betreffende Leitungen (7, 8) des Bremskreises (3) durchsetzt wird, und betreffende bewegliche Kolben (56, 57), die benachbart hintereinander angeordnet sind und mit dem Abstandsring (38) zusammenwirken, umfaßt, wobei diese in fluiddichter Weise die Kammer (55) zum Abstandsring hin abschließen, so daß sie durch den durch den Hauptzylinder (6) erzeugten Druck in Bewegung gesetzt werden, um folglich den Abstandsring (38) gegen das Ventilelement (40) zu bewegen, womit letzteres in Abstand zum Ventilsitz (46) gebracht wird.

6. Vorrichtung nach irgendeinem der vorstehenden Ansprüche, dadurch gekennzeichnet, daß die vierte Kammer (30) mit der ersten Kammer (18) durch einen Schlauch (36) verbunden ist, und die dritte Kammer (31) an ein Unterdruckrohr (35) angeschlossen ist, welches die erste Kammer (19) mit dem Einrichtungsventil (25) verbindet.

7. Vorrichtung nach irgendeinem der vorstehenden Ansprüche, dadurch gekennzeichnet, daß die elastischen Gegenwirkungsmittel (16) für die Steuerstange (2) in der ersten Kammer (18) aufgenommen sind und direkt auf den Gleitkolben (15) wirken.

## Revendications

1. Servo-frein à dépression pour un véhicule, comprenant un maître-cylindre hydraulique (6) disposé pour refouler du fluide sous pression dans le circuit de freinage du véhicule, après la translation d'une tige de commande (2) pouvant être actionnée mécaniquement par l'utilisateur contre l'action de moyens élastiques, un premier vérin pneumatique à dépression (10) dont une première chambre (18) est délimitée par un piston coulissant (15) solidaire de la tige de commande et est raccordée à une vanne de commande de dépression (26) agencée pour raccorder sélectivement cette première chambre à l'atmosphère ou à une source de dépression, ce premier vérin à dépression (10) étant disposé en amont du maître-cylindre (6) par rapport à la tige de commande (2) et étant traversé d'une manière étanche aux fluides par la tige de commande, cette vanne de commande (26) étant disposée en aval du maître-cylindre (6) par rapport à la tige de commande (2), et des moyens pour actionner la vanne de commande en fonction de la force exercée par l'utilisateur sur la tige de commande, ces moyens d'actionnement de la vanne de commande comprenant un vérin hydraulique (28) raccordé hydrauliquement au circuit de freinage du véhicule (3) en aval du maître-cylindre (6) et un deuxième vérin pneumatique (29) disposé mécaniquement en série avec le vérin hydraulique (28) entre ce dernier et la vanne de commande (26), caractérisé en ce que le premier vérin pneumatique comprend une deuxième chambre (19) séparée de la première chambre par le piston coulissant (15) et raccordée de façon permanente à cette source de dépression au moyen d'une vanne unidirectionnelle (25), et en ce que, en combinaison, le deuxième vérin pneumatique (29) de la vanne de commande (26) comprend une troisième chambre (31) et une quatrième chambre (30) qui sont raccordées de façon permanente, respectivement à la deuxième chambre (19) et à la première chambre (18) du premier vérin pneumatique à dépression.

2. Servo-frein selon la revendication 1, caractérisé en ce que la vanne de commande (26) comporte un tiroir (38) disposé à l'intérieur du deuxième vérin pneumatique (29) et comportant intérieurement un conduit (41) agencé pour faire communiquer mutuellement la troisième chambre (31) et la quatrième chambre (30), une entrée d'air (39) communiquant avec l'environnement à pression atmosphérique, et un élément de soupape (40) pour cette entrée d'air (39) agencé pour coopérer avec une première extrémité (44) du tiroir (38) afin de fermer une première embouchure (42) de ce conduit interne du tiroir et pour être déplacé par ce dernier contre l'action de moyens élastiques (52) dans une direction ouvrant cette entrée d'air.

3. Servo-frein selon la revendication 2, caractérisé en ce que le tiroir (38) est solidarisé du vérin pneumatique (29) par un élément mobile (32) de celui-ci, lequel sépare la troisième chambre de la quatrième chambre de manière étanche aux fluides, et en ce que, au moyen de sa deuxième extrémité (45), qui est distante de la première extrémité et qui comporte latéralement une deuxième embouchure (43) du conduit interne (41), il coopère avec le vérin hydraulique, la première embouchure (42) du conduit interne étant disposée en correspondance avec la quatrième chambre (30) devant l'entrée d'air (39), et la deuxième embouchure (43) du conduit interne étant disposée en correspondance avec la troisième chambre (31).

4. Servo-frein selon la revendication 3, caractérisé en ce que l'entrée d'air (39) comporte un élément de guidage (48) pour la première extrémité du tiroir et est disposée dans la quatrième chambre (30) en correspondance avec un siège de soupape (46) pour l'élément de soupape, cet élément de guidage comportant une multiplicité de trous de communication (47) entre le siège et la quatrième chambre, un carter (49) étant monté rigidement sur le siège de soupape et contenant intérieurement cet élément de soupape (40) et un ressort (52) agencé pour maintenir ce dernier appliqué contre le siège de soupape, un filtre (50) étant disposé autour de cet élément de soupape devant des ouvertures traversantes latérales respectives (51) dans le carter (49).

5. Servo-frein selon la revendication 4, caractérisé en ce que le vérin hydraulique (28) comporte une chambre (55) traversée transversalement par des conduits respectifs (7, 8) du circuit de freinage (3) et des plongeurs mobiles respectifs (56, 57) disposés adjacents l'un derrière l'autre et coopérant avec le tiroir (38), ces plongeurs fermant d'une manière étanche aux fluides la chambre (55) en direction du tiroir de façon à être déplacés par la pression produite par le maître-cylindre (6) pour déplacer par voie de conséquence le tiroir (38) contre l'élément de soupape (40), éloignant ainsi celui-ci du siège de soupape (46).

6. Servo-frein selon l'une quelconque des revendications précédentes, caractérisé en ce que la quatrième chambre (30) est raccordée à la première chambre (18) par un tuyau (36) et en ce que la troisième chambre (31) est raccordée à une canalisation de dépression (35) qui raccorde cette première chambre (19) à la vanne unidirectionnelle (25).

7. Servo-frein selon l'une quelconque des revendications précédentes, caractérisé en ce que les moyens antagonistes élastiques (16) pour la tige de commande (2) sont logés dans la première chambre (18) et agissent directement sur le piston coulissant (15).

Fig.1

EP 0 261 537 B1

Fig. 3

Fig. 2